# EUROPÄISCHE PATENTSCHRIFT

(11) **EP 1 329 011 B1**
(45) Veröffentlichungstag und Bekanntmachung des Hinweises auf die Patenterteilung: **31.08.2005**
(21) Anmeldenummer: 01982343.4
(22) Anmeldetag: 24.09.2001
(51) Int. Cl.: H02G 13/00

(54) **LICHTLEITFASERVERBINDUNGSGEHÄUSE**
OPTICAL FIBER CONNECTION HOUSING
BOITIER POUR CONNEXIONS DE FIBRES OPTIQUES

(30) Priorität: 27.09.2000 GB 0023667
(43) Veröffentlichungstag der Anmeldung: 23.07.2003
(73) Patentinhaber: ADC GmbH, 14167 Berlin (DE)
(72) Erfinder: TAYLOR, Christopher, Charles, Cheltenham, Gloucestershire GL52 6EN (GB)
(86) Internationale Anmeldenummer: PCT/EP2001/011019
(87) Internationale Veröffentlichungsnummer: WO 2002/027883

(56) Entgegenhaltungen:
- WO-A-98/48308
- US-A- 5 668 911
- US-A- 5 790 741

## Beschreibung

Die vorliegende Erfindung betrifft ein Gehäuse zur Verwendung bei der Bereitstellung einer Verbindung zwischen Lichtleitfasern in Leitungsbündeln oder Wandkästen oder Unterflurkästen in einem Gebäude und einem oder mehreren Geräten in diesem Gebäude.

Die Verwendung von Lichtleitfasern als Medium zum Führen von Signalen verbreitet sich immer weiter, und es ist mittlerweile nicht ungewöhnlich, dass in einem Gebäude verwendete Geräte eine Lichtleitfaser aufweisen, mit der sie an eine Anschlussdose angekoppelt werden können. Anschlussdosen für Lichtleitfasern müssen in der Lage sein, Verbindungen zwischen Geräten, wie zum Beispiel den oben erwähnten, und Lichtleitfasern bereitzustellen, die sich zum Beispiel in den Leitungsbündeln des Gebäudes befinden. Sie müssen außerdem eine Einrichtung bereitstellen, die berücksichtigt, dass manchmal ein Neuabschluss von Fasern in der Anschlussdose notwendig ist.

Aus der US-5,790,741 ist ein Gehäuse zur Verwendung bei der Bereitstellung einer Verbindung zwischen Lichtleitfasern in Leitungsbündeln bekannt, wobei das Gehäuse ein erstes und ein zweites Gehäuseglied umfasst, die verbindbar sind, wobei das erste Gehäuseglied an einer Wand in dem Gehäuse angebracht werden kann, so dass es Lichtleitfasern aus dem Leitungsbündel aufnehmen kann, das erste Gehäuseglied Ausbildungen aufweist, die einen Weg für die Fasern definieren, das zweite Gehäuseglied Ausbildungen aufweist, die einen Weg definieren, der Fasern aus dem ersten Gehäuseglied aufnehmen kann und über den die Fasern zu einem Spleißbereich geführt werden können, und das zweite Gehäuseglied weitere Ausbildungen aufweist, die Wege für Fasern definieren, die sich von dem Spleißbereich zu einem oder mehreren Ausgängen erstrecken.

Aus der US-5,668,911 ist ein Gehäuse für optische Fasern mit zwei Gehäusegliedern bekannt, wobei das zweite Gehäuseglied zwei Teile umfasst. Der erste Teil des zweiten Gehäusegliedes enthält ein zweites Teil von schalenartiger Form und mit Ausbildungen, wobei der zweite Teil bewegbar ist, um einen besseren Zugang zu den darunter gelegten Bauelementen zu ermöglichen.

Der Erfindung liegt das technische Problem zugrunde, ein kompaktes und bedienungsfreundliches Gehäuse bereitzustellen, das Verbindungen zwischen Lichtleitfasern und Geräten ermöglicht und Neuabschlüsse der Lichtleitfasern erlaubt.

Gemäß der vorliegenden Erfindung wird ein Gehäuse nach Anspruch 1 zur Verwendung bei der Bereitstellung einer Verbindung zwischen Lichtleitfasern in Leitungsbündeln oder dergleichen in einem Gebäude und einem oder mehreren Geräten bereitgestellt.

Der Spleißbereich kann in dem schalenartigen Glied definiert und so angeordnet sein, dass er eine oder mehrere Spleißeinheiten aufnimmt. Jede Spleißeinheit kann ein Formglied umfassen, das eine Anzahl nebeneinander liegender Kanäle definiert. In dem Spleißbereich kann außerdem eine Abzweigungseinheit untergebracht werden, die bei Verwendung unter der Spleißeinheit bzw. den Spleißeinheiten angeordnet wird.

Die geformten Ausbildungen können Wege definieren, die so angeordnet sind, dass sie einen Krümmungsradius aufweisen, der nicht kleiner ist als ein im Voraus gewählter kritischer Radius. Die Wege können so definiert werden, dass sich die Lichtleitfasern mehrmals um sie herum erstrecken können.

Die auf dem ersten Gehäuseglied bereitgestellten Ausbildungen können einen Weg definieren, dessen Form eine Änderung der Richtung der Fasern ermöglicht, ohne dass die Faser mit einem Biegeradius gebogen werden muss, der kleiner ist als ein kritischer Biegeradius.

Die Erfindung wird nun lediglich beispielhaft beschrieben, wobei insbesondere auf die beigefügten Zeichnungen Bezug genommen wird. Es zeigen:

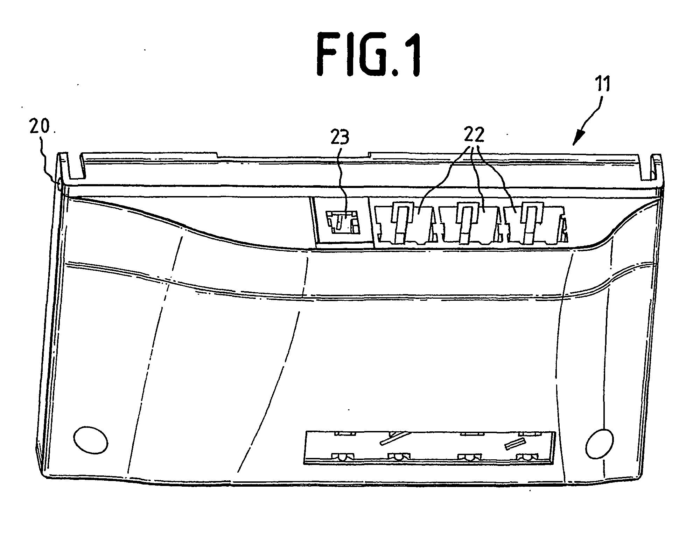

- Fig. 1: eine perspektivische Ansicht eines Anschlussdosengehäuses für Lichtleitfasern gemäß einer Ausführungsform der vorliegenden Erfindung;

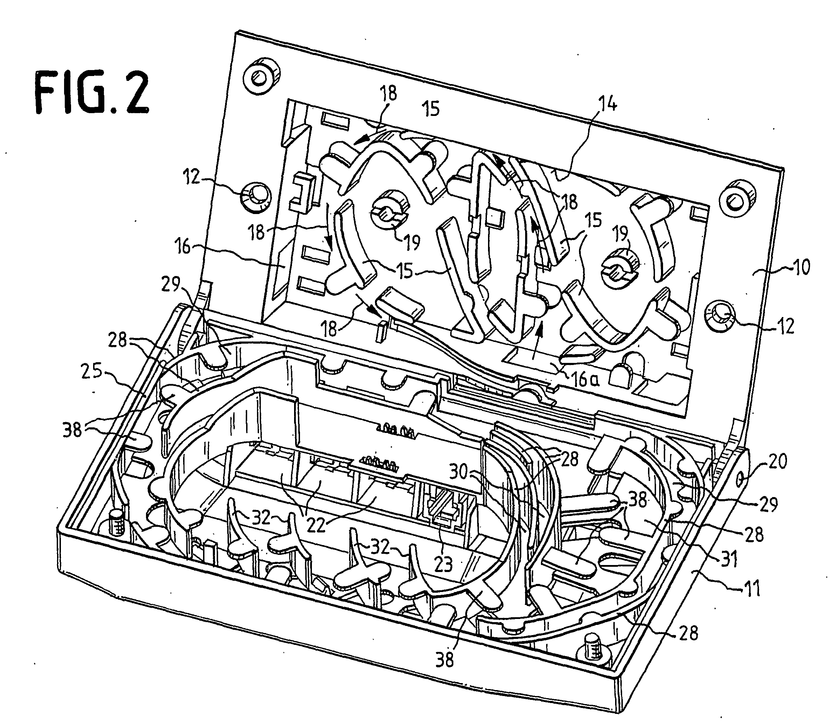

- Fig. 2: das Anschlussgehäuse in einem offenen Zustand;

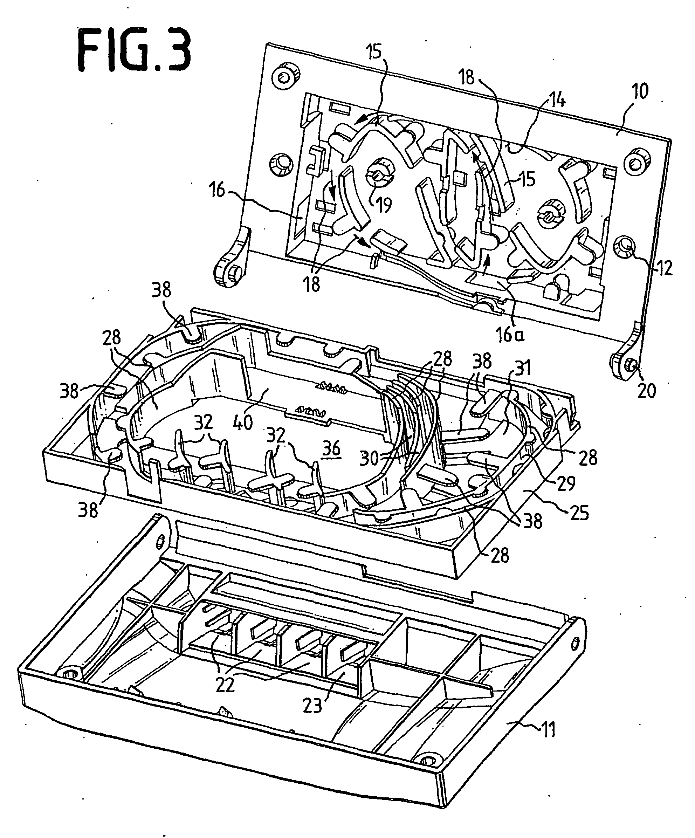

- Fig. 3: eine Explosionsansicht des Ausgangsgehäuses;
- Fig. 4: eine perspektivische Ansicht einer Spleißeinheit und
- FIG. 5: eine perspektivische Ansicht einer Abzweigungseinheit.

Mit Bezug auf die Zeichnungen umfaßt ein Gehäuse zur Verwendung als Anschlußdose für Lichtleitfasern einen ersten und einen zweiten Gehäuseteil (10) und (11). Der Gehäuseteil (10) ist aus Kunststoffmaterial geformt und kann mittels sich durch Öffnungen (12) erstreckender Schrauben an einer Wand, wie zum Beispiel einer Innenwand eines Gebäudes, befestigt werden. Der Gehäuseteil (10) ist so geformt, daß er einen ausgesparten Teil (14) aufweist, in dem mehrere geformte Ausbildungen (15) ausgeformt sind. Eine Wand des Aussparungsteils (14) enthält außerdem eine oder mehrere Öffnungen (16, 16a). Die Ausbildungen (15) sind so entworfen, daß sie Wege definieren, in denen sich Lichtleitfasern erstrecken können, wobeies diese Wege ermöglichen, die Richtung der Fasern zu ändern, ohne diese mit einem Biegeradius zu biegen, der kleiner ist als ein kritischer Biegeradius. Zum Beispiel können durch die Öffnung (16a) aus dem Leitungsbündel eintretende Lichtleitfasern entlang dem durch die Bezugszahl (18) gezeigten Weg verlaufen. Der Gehäuseteil enthält außerdem zwei geschlitzte ringförmige Ausbildungen (19), die als Ruhepunkte für ein Kevlarglied wirken, das zur Befestigung eines Lichtleitfaserkabels verwendet werden kann.

Auch der zweite Gehäuseteil (11) ist aus Kunststoffmaterial geformt und besitzt eine Gelenkverbindung (20) mit dem ersten Gehäuseteil, so daß der erste und der zweite Gehäuseteil in bezug aufeinander schwenkbar sind. Der zweite Gehäuseteil (20) ist so geformt, daß eine Anzahl nebeneinanderliegender Ausgänge (22) und (23) definiert wird, die Lichtleitfaserverbinderteile aufnehmen können.

Der zweite Gehäuseteil (11) kann ein schalenartiges Glied (25) aufnehmen, das so in dem zweiten Gehäuseglied (11) sitzt, daß es über den Ausgängen (22) und (23) angeordnet ist. Das schalenartige Glied (25) wird aus Kunststoffmaterial geformt und enthält mehrere gekrümmte Ausbildungen, die allgemein bei (28) gezeigt sind. Diese Ausbildungen (28) definieren eine Anzahl von Bahnen, in denen sich Lichtleitfasern erstrecken können. Zu diesen gehören eine bei (29) gezeigte äußere Bahn, innere Bahnen (30) und ein Auschlagsbereich (31). Zusätzlich definieren Ausbildungen (32) Wege, in denen sich Fasern zu den Ausgängen (22) und (23) erstrecken können. In diesem Zusammenhang sollte beachtet werden, daß der Mittelbereich (36) der Schale offen ist. Die Ausbildungen (28) und (32) enthalten vorstehende Finger (38), die als Halteglieder für in Bahnen (29, 30) angeordnete Fasern wirken.

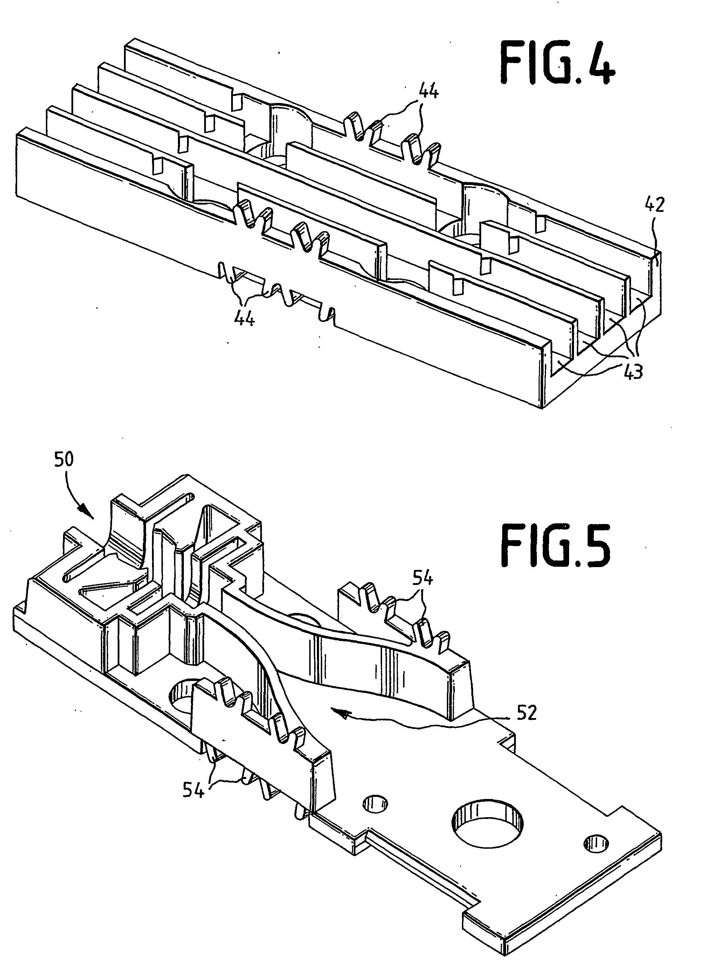

Die Schale ist außerdem so geformt, daß ein Fach (40) definiert wird. Das Gebiet über dem Fach (40) bildet einen Spleißbereich, der eine oder mehrere Spleißeinheiten (42), wie zum Beispiel die in FIG. 4 der Zeichnungen gezeigte, aufnehmen kann. Diese Spleißeinheit (42) ist aus Kunststoffmaterial geformt und definiert vier nebeneinanderliegende Kanäle (43), in denen jeweils eine Lichtleitfaser untergebracht werden kann. Auf der Spleißeinheit (42) sind außerdem bei (44) gezeigte Ausbildungen ausgebildet, die Clip-Glieder darstellen. Die unteren Clip-Glieder (44) können ähnliche Clip-Glieder in Eingriff nehmen, die auf dem Fach (40) ausgebildet sind, um die Spleißeinheit auf dem Fach festzuhalten. Die oberen Clip-Einheiten (44) können durch eine weitere Spleißeinheit in Eingriff genommen werden, die über der in FIG. 4 gezeigten angeordnet ist, um zwei solche Einheiten in bezug aufeinander zu befestigen.

Außerdem ist es möglich, gegebenenfalls eine sogenannte Abzweigungseinheit in dem Spleißbereich anzuordnen. Eine typische Abzweigungseinheit ist in FIG. 5 der Zeichnungen gezeigt und befindet sich, falls vorhanden, unter einer Spleißeinheit, wie zum Beispiel (42), d.h. sie ist direkt auf dem Fach (40) angebracht. Die Abzweigungseinheit ist ein geformtes Kunststoffelement, das einen Weg für eine Gruppe von Lichtleitfasern definiert, mit einem Eingang (50) und einem auseinanderlaufenden Teil (52) an seinem gegenüberliegenden Ende, wodurch Lichtleitfasern entlang einer Anzahl nebeneinanderliegender Kanäle aufgefächert werden können. Die Abzweigungseinheit besitzt außerdem Ausbildungen (54), deren Funktion mit den Ausbildungen (44) auf der Spleißeinheit übereinstimmt.

Bei der Verwendung wird die Anschlußdose mittels sich durch die Öffnungen (12) erstreckender Schrauben an einer Wand befestigt. Ein Abschnitt eines Lichtleitfaserkabels oder eines Bündels von Lichtleitfasern wird aus dem Leitungsbündel hinter der Wand zum Beispiel durch die Öffnung (16a) und um den Weg (18) herum eingeführt. Diese Fasern werden dann in den Schalenabschnitt (25) eingeführt, so daß sie sich um den äußeren Weg (29) herum erstrecken, der durch die Ausbildungen (28) definiert wird. Diese Fasern können mehrmals um die Schale herum geführt werden und durchlaufen dabei jedesmal den Auschlagsbereich (31). Dadurch wird effektiv ein gewisses Maß an Kabelzuschlag oder überschüssiger Länge von Fasern bereitgestellt, das ausreicht, um einen Neuabschluß zu ermöglichen, falls dies später erforderlich werden sollte. Schließlich werden die Fasern in den Spleißbereich (40) eingeführt. Wenn die Abzweigungseinheit verwendet wird, werden die Fasern zunächst in die Abzweigungseinheit eingeführt und treten von dort aus in die inneren Kanäle (30) ein und verlaufen dann um den inneren Weg herum zu einer Spleißeinheit, wie zum Beispiel der in (42) gezeigten. Die Enden dieser Fasern werden dann mit weiteren Lichtleitfaserabschnitten verspleißt, wobei sich die Spleiße in jedem der Kanäle (43) der Spleißeinheit (42) befinden. Die zusätzlichen Faserabschnitte werden dann in die Kanäle (30) eingeführt und können selbst mehrmals durch den Zuschlagsbereich (31) um die Schale herum geleitet werden, bis sie schließlich auf dem äußeren Weg (29) verlaufen und durch die Ausgangsabschnitte (32) austreten. An den Enden dieser Faserabschnitte befinden sich entsprechende Lichtleitfaserverbinderelemente, die in den bei (22) und (23) gezeigten Ausgängen befestigt sind. Diese Verbinderelemente können entsprechende Verbinderelemente aufnehmen, die auf den Enden von sich von Geräten in dem Gebäude aus erstreckenden Lichtleitfasern bereitgestellt sind.

Die Ausbildungen (15) und (28) sind alle so entworfen, daß Wege definiert werden, deren Krümmungsradius nicht kleiner ist als der kritische Krümmungsradius, um den eine Lichtleitfaser gebogen werden sollte. Ein Merkmal der vorliegenden Anschlußdose ist die Bereitstellung eines Zuschlagsbereichs (31) in dem Gehäuse, in dem eine beträchtliche Länge Lichtleitfaser untergebracht werden kann. Der Grund dafür besteht darin, daß, falls es später erforderlich sein sollte, die Fasern neu abzuschließen und zu spleißen, dies möglich ist, da in dem Gehäuse genug Faserlänge untergebracht ist, um einen solchen Neuabschluß zu ermöglichen.

## Patentansprüche

1. Gehäuse zur Verwendung bei der Bereitstellung einer Verbindung zwischen Lichtfaser in Leitungsbündeln in einem Gebäude und einem oder mehreren Geräten, wobei das Gehäuse ein erstes (10) und ein zweites (11) Gehäuseglied umfasst, die verbindbar sind, wobei das erste Gehäuseglied (10) an einer Wand in dem Gebäude angebracht werden kann, so dass es Lichtleitfasern aus dem Leitungsbündel aufnehmen kann, das erste Gehäuseglied (10) Ausbildungen (15) aufweist, die einen Weg (18) für die Fasern definieren, das zweite Gehäuseglied Ausbildungen (28) aufweist, die einen Weg (29) definieren, der Fasern aus dem ersten Gehäuseglied (10) aufnehmen kann und über den die Fasern zu einem Spleißbereich (40) geführt werden können, und das zweite Gehäuseglied weitere Ausbildungen (28) aufweist, die Wege (30) für Fasern definieren, die sich von dem Spleißbereich (49) zu einem oder mehreren Ausgängen (22, 23) erstrecken,
**dadurch gekennzeichnet, dass**
das zweite Gehäuseglied zwei Teile (11, 25) umfasst, wobei ein erster Teil (11) schwenkbar mit dem ersten Gehäuseglied (10) verbunden und so geformt ist, dass er den einen oder die mehreren Ausgänge (22, 23) enthält, und wobei der erste Teil (11) einen zweiten Teil (25) aufnimmt, der als ein schalenartiges Glied geformt ist, das die Ausbildungen (28) enthält, die die Wege (29, 30) definieren, sowie einen Zuschlagsbereich (31) zur Verstauung von überschüssigen Längen von Fasern, wobei der Mittelbereich (36) des schalenartigen Gliedes (25) offen ist, so dass die Fasern durch den offenen Mittelbereich (36) des zweiten Teiles (25) zu den Ausgängen (22, 23) des ersten Teiles gelangen können.

2. Gehäuse nach Anspruch 1, wobei der Spleißbereich (40) in dem schalenartigen Glied (25) definiert und so angeordnet ist, daß er eine oder mehrere Spleißeinheiten (42) aufnimmt.

3. Gehäuse nach Anspruch 2, wobei jede Spleißeinheit (42) ein Formglied umfaßt, das eine Anzahl nebeneinanderliegender Kanäle (43) definiert.

4. Gehäuse nach Anspruch 2 oder Anspruch 3, wobei in dem Spleißbereich (40) außerdem eine Abzweigungseinheit (50) untergebracht werden kann, die bei Gebrauch unter der Spleißeinheit (42) bzw. den Spleißeinheiten angeordnet wird.

5. Gehäuse nach einem der vorhergehenden Ansprüche, wobei die Ausbildungen (15, 28) Wege (18, 29, 30) definieren, die so angeordnet sind, daß sie einen Krümmungsradius aufweisen, der nicht kleiner ist als ein im voraus gewählter kritischer Radius.

6. Gehäuse nach einem der vorhergehenden Ansprüche, wobei die Wege (18, 29, 30) so definiert sind, daß sich die Lichtleitfasern mehrmals um sie herum erstrecken können.

7. Gehäuse nach einem der vorhergehenden Ansprüche, wobei die auf dem ersten Gehäuseglied (10) bereitgestellten Ausbildungen (15) einen Weg (18) definieren, dessen Form eine Änderung der Richtung der Fasern gestattet, ohne daß die Faser einer Biegung mit weniger als einem kritischen Biegeradius ausgesetzt wird.

## Claims

1. Housing for use when producing a connection between optical fibres in line bundles in a building and one or more devices, the housing comprising a first housing element (10) and a second housing element (11) which can be connected, it being possible for the first housing element (10) to be fitted to a wall in the building such that it can accommodate optical fibres from the line bundle, the first housing element (10) having formations (15) which define a path (18) for the fibres, the second housing element having formations (28) which define a path (29) which can accommodate fibres from the first housing element (10) and via which the fibres can be passed to a splicing region (40), and the second housing element having further formations (28) which define paths (30) for fibres which extend from the splicing region (49) to one or more outputs (22, 23), **characterized in that** the second housing element comprises two parts (11, 25), a first part (11) being connected to the first housing element (10) such that it can pivot or being shaped such that it contains the one or more outputs (22, 23), and the first part (11) accommodating a second part (25) which is in the form of a shell-like element which contains the formations (28) which define the paths (29, 30), and a surplus region (31) for the purpose of stowing excess lengths of fibres, the central region (36) of the shell-like element (25) being open such that the fibres can pass through the open central region (36) of the second part (25) to the outputs (22, 23) of the first part.

2. Housing according to Claim 1, the splicing region (40) being defined in the shell-like element (25) and being arranged such that it accommodates one or more splicing units (42).

3. Housing according to Claim 2, each splicing unit (42) comprising a shaped element which defines a number of channels (43) which lie next to one another.

4. Housing according to Claim 2 or Claim 3, it being possible for a branching unit (50) to also be accommodated in the splicing region (40), said branching unit (50) being arranged on use below the splicing unit (42) or the splicing units.

5. Housing according to one of the preceding claims, the formations (15, 28) defining paths (18, 29, 30) which are arranged such that they have a radius of curvature which is no smaller than a critical radius which is selected in advance.

6. Housing according to one of the preceding claims, the paths (18, 29, 30) being defined such that the optical fibres can extend several times around them.

7. Housing according to one of the preceding claims, the formations (15) provided on the first housing element (10) defining a path (18), whose shape allows for a change in the direction of the fibres without the fibres being bent at a bending radius which is less than a critical bending radius.

## Revendications

1. Boîtier destiné à être utilisé pour fournir une connexion entre une fibre optique dans des faisceaux de lignes dans un bâtiment et un ou plusieurs appareils, le boîtier comprenant un premier (10) et un deuxième (11) organe de boîtier, qui peuvent être connectés, le premier organe de boîtier (10) pouvant être monté sur une paroi dans le bâtiment de sorte qu'il puisse recevoir des fibres optiques provenant du faisceau de lignes, le premier organe de boîtier (10) présentant des formations (15) qui définissent une voie (18) pour les fibres, le deuxième organe de boîtier présentant des formations (28) qui définissent une voie (29) qui peut recevoir des fibres provenant du premier organe de boîtier (10) et par le biais de laquelle les fibres peuvent être guidées vers une région d'épissure (40), et le deuxième organe de boîtier présentant d'autres formations (28) qui définissent des voies (30) pour des fibres, qui s'étendent depuis la région d'épissure (49) vers une ou plusieurs sorties (22, 23),
**caractérisé en ce que**
le deuxième organe de boîtier comprend deux parties (11, 25), une première partie (11) étant connectée à pivotement au premier organe de boîtier (10) et étant formée de telle sorte qu'elle contienne l'une ou plusieurs des sorties (22, 23), et la première partie (11) recevant une deuxième partie (25) qui est formée en tant qu'organe en forme de coque qui contient les formations (28) qui définissent les voies (29, 30), ainsi qu'une région supplémentaire (31) pour recevoir des longueurs en excès de fibres, la région centrale (36) de l'organe (25) en forme de coque étant ouverte, de sorte que les fibres puissent parvenir par la région centrale ouverte (36) de la deuxième partie (25) jusqu'aux sorties (22, 23) de la première partie.

2. Boîtier selon la revendication 1, dans lequel la région d'épissure (40) est définie dans l'organe en forme de coque (25) et est disposée de telle sorte qu'elle reçoive une ou plusieurs unités d'épissure (42).

3. Boîtier selon la revendication 2, dans lequel chaque unité d'épissure (42) comprend un organe moulé qui définit une pluralité de canaux juxtaposés (43).

4. Boîtier selon la revendication 2 ou la revendication 3, dans lequel, dans la région d'épissure (40), peut en outre être montée une unité de dérivation (50) qui est disposée lors de l'utilisation sous l'unité d'épissure (42) ou les unités d'épissure.

5. Boîtier selon l'une quelconque des revendications précédentes, dans lequel les formations (15, 28) définissent des voies (18, 29, 30) qui sont disposées de telle sorte qu'elles présentent un rayon de courbure qui n'est pas inférieur à un rayon critique sélectionné à l'avance.

6. Boîtier selon l'une quelconque des revendications précédentes, dans lequel les voies (18, 29, 30) sont définies de telle sorte que les fibres optiques puissent s'étendre plusieurs fois autour d'elles.

7. Boîtier selon l'une quelconque des revendications précédentes, dans lequel les formations (15) prévues sur le premier organe de boîtier (10) définissent une voie (18) dont la forme permet une variation de l'orientation des fibres, sans que les fibres soient soumises à une flexion avec un rayon de courbure inférieur à un rayon critique.
